# EUROPÄISCHE PATENTSCHRIFT

(11) **EP 3 061 587 B1**
(45) Veröffentlichungstag und Bekanntmachung des Hinweises auf die Patenterteilung: **13.12.2017**
(21) Anmeldenummer: 15156407.7
(22) Anmeldetag: 24.02.2015
(51) Int. Cl.: B29C 45/16, B29D 11/00, B60Q 1/26, B60R 1/12, F21S 8/10, F21V 8/00, B29L 31/00, B29L 11/00

(54) **Verfahren zum Herstellen einer Leuchte für Fahrzeuge und Außenspiegelanordnung eines Fahrzeuges mit einer so hergestellten Leuchte**
Method for producing a light for vehicles and external mirror assembly of a vehicle with a light produced in such a way
Procédé de fabrication d'une lampe pour véhicules et rétroviseur extérieur d'un véhicule doté d'une lampe ainsi fabriquée

(43) Veröffentlichungstag der Anmeldung: 31.08.2016
(73) Patentinhaber: SMR Patents S.à.r.l., 1653 Luxembourg (LU)
(72) Erfinder: Negel, Raimund, 72669 Unterensingen (DE); Schmierer, Arne, 73230 Kirchheim/Teck (DE); Fritz, Daniel, 70374 Stuttgart (DE)
(74) Vertreter: Weber-Bruls, Dorothée

(56) Entgegenhaltungen:
- EP-A1- 2 407 346
- EP-A1- 2 525 138
- DE-A1-102008 044 357
- DE-A1-102011 106 595

## Beschreibung

Die vorliegende Erfindung betrifft ein Verfahren zum Herstellen einer Leuchte für Fahrzeuge und eine Außenspiegelanordnung eines Fahrzeuges mit einer so hergestellten Leuchte, vorzugsweise in Form eines Blinkers.

Aus der EP 1 657 488 B1 ist eine Leuchte für Fahrzeuge, insbesondere deren Außenspiegelanordnungen, bekannt. Bei dieser Leuchte ist ein im Wesentlichen U-förmiges Gehäusevorderteil, das als transparente Lichtscheibe ausgebildet ist, mit einer Gehäuserückwand untrennbar durch eine Schweißnaht oder eine Klebenaht verbunden, um ein geschlossenes, wasserdichtes Gehäuse bereitzustellen, in dem zumindest ein Leuchtmittel angeordnete ist. Die Gehäusebauteile können dabei aus harten Kunststoffen, vorzugsweise aus Polymethylacrylat (PMMA) oder Kunststoffen dieser Familie hergestellt werden. Die Gehäuserückwand kann auch aus einem anderen Kunststoff, wie beispielsweise Polycarbonat (PC), Polybutylenterephalat (PBT) oder dergleichen, hergestellt sein.

Eine weitere solche Leuchte für Fahrzeuge ist aus der EP 1 852 306 B1 bekannt, bei der ein U-förmiges Gehäusevorderteil an seiner Außenseite und/oder Innenseite und/oder ein Leuchtmittel eine Optik bspw. in Form einer Oberflächenstrukturierung zur Fokussierung, Parallel-Richtung oder Streuung abgestrahlten Lichts aufweist bzw. aufweisen.

Der Aufbau dieser bekannten Leuchten ist aufwendig. Zudem werden Toleranzen angrenzender Spaltmasse durch Schweißprozesse negative beeinflusst. Auch ist das Design der Leuchten bspw. als Blinker in einer Außenspiegelanordnung eines Fahrzeuges durch die Notwendigkeit einer Schweiß- oder Klebenaht beschränkt.

In der DE 10 2011 103 200 A1 ist ein Lichtfenster für eine beleuchtete Einheit in einer Außenspiegelanordnung offenbart, wobei das Lichtfenster an die Außenkontur des Gehäuses der Außenspiegelanordnung angepasst ist und eine Öffnung im Gehäuse der Außenspiegelanordnung verschließt. Das Lichtfenster dient dabei als Lichtleiter und weist Auskoppelstrukturen mindestens an einer Stelle auf. Zu diesem Zweck ist das Lichtfenster aus einer optischen Folie mit angespritzter Beschichtung hergestellt, die als Lichtleiter ausgebildet ist, wobei die optische Folie die mindestens eine Auskoppelstruktur enthält. Für die Herstellung des Lichtfensters kann ein glasklares Basismaterial, alternative dazu farbiges lichtdurchlässiges Material, verwendet werden, und es ist eine Herstellung in einer einzigen Spritzform möglich. Die optische Folie, die eine PC-Folie sein kann, wird zur Herstellung des Lichtfensters in die Spritzform eingelegt, so dass auf einer Hohlformseite der Folie eine Schutzschicht und auf die Kernseite der Folie die Beschichtung gespritzt wird, die aus PC oder PMMA bestehen kann.

Das Anspritzen einer Beschichtung an eine Folie zur Herstellung eines Lichtfensters bspw. eines Blinkers ist kompliziert, zumal noch eine Befestigung an einem Gehäuse notwendig ist.

Aus der DE 10 2008 044 357 A1 ist ein Verfahren zum Herstellen eines transparenten Elements für eine Fahrzeugleuchte bekannt. Durch Dreikomponentenspritzguss wird ein mehrschichtiger Körper mit einer Trägerschicht, einer Lichtleiterschicht und einer darauf aufgebrachten transparenten Schicht erzeugt, wobei die Brechungsindizes zwischen den Schichten so gewählt werden, dass sich im Lichtleiter eine im Wesentlichen vollständige Lichtleitung ergibt.

Aufgabe der vorliegenden Erfindung ist es, ein Verfahren zum Herstellen einer Leuchte für Fahrzeuge zu liefern, das die Nachteile des Stand der Technik überwindet. Insbesondere soll die Leuchte einfach herstellbar sein und eine große Designfreiheit eröffnen, und zwar bei hoher Lichtausbeute.

Diese Aufgabe wird gelöst durch ein Verfahren zum Herstellen einer Leuchte für Fahrzeuge, bei dem ein Gehäuse, ein Lichtleiter und eine Lichtscheibe in einem 3-Komponenten-Spritzverfahren aus Kunststoff als Einheit hergestellt werden, wobei der Lichtleiter an einem Ende zumindest eine Licht-Einkoppelstelle aufweist, der Brechungsindex des Kunststoffes der Lichtscheibe von dem Brechungsindex des Kunststoffes des Lichtleiters unterschiedlich gewählt wird, die Grenzfläche zwischen der Lichtscheibe und dem dazu benachbarten Lichtleiter mit einer Optik ausgeformt wird, und über den Unterschied der beiden Brechungsindizes sowie die Optik bei vorgegebenem Lichteintritt an zumindest einer Licht-Einkoppelstelle an einem Ende des Lichtleiters Licht-Auskoppelstellen längs der Erstreckung des Lichtleiters und aus der Leuchte heraus festgelegt werden, wobei die Oberfläche des Lichtleiters, die an die Unterfläche der Lichtscheibe angrenzt, mit einer Optik versehen ist, über die Totalreflexionsstellen und Auskoppelstellen für das Licht, das den Lichtleiter an jeder Einkoppelstelle betritt, bereitgestellt werden, indem nicht nur die Lichtscheibe mit einer korrespondierenden Optik an ihrer der Optik des Lichtleiters gegenüberliegenden Fläche ausgeformt ist, sondern zudem die Brechnungsindizes der Kunststoffe der Lichtscheibe und des Lichtleiters derart unterschiedlich sind, dass es ausschließlich an den Auskoppelstellen nicht zu einer Totalreflexion kommt.

Dabei erfolgt das Spritzverfahren in 3 Takten, wobei durch den Kunststoff der 3 Komponenten die Reihenfolge der Herstellung der 3 Komponenten bestimmt wird, indem zuerst der Kunststoff mit dem höchsten Schmelzpunkt gespritzt wird, dann der mit dem mittleren Schmelzpunkt und schließlich der mit dem niedrigsten Schmelzpunkt.

Mit der Erfindung wird auch vorgeschlagen, dass in den Lichtleiter und/oder die Lichtscheibe mindestens ein Lichtkonditionierbereich, wie zum Tönen, Einfärben, Reflektieren, Streuen oder dergleichen, durch Auswahl von zumindest einem Zusatz zu dem jeweiligen Kunststoff eingebracht wird.

Erfindungsgemäß kann das Gehäuse mit einer Aussparung zu einem Bauraum für zumindest ein Leuchtmittel ausgeformt werden, wobei die Aussparung vorzugsweise mit einem Deckel, insbesondere samt Steckerkasten, nach Einbringung des Leuchtmittels in den Bauraum verschlossen wird.

Ferner kann vorgesehen sein, dass das Leuchtmittel durch mindestens eine LED auf einer Platine bereitgestellt wird, und/oder die zumindest eine Licht-Einkoppelstelle an dem dem Bauraum zugewandten Ende des Lichtleiters bereitgestellt wird.

Auch wird vorgeschlagen, dass der Lichtleiter von dem Gehäuse und der Lichtscheibe umschlossen wird, wobei in Abhängigkeit vom Querschnitt des Lichtleiters im Wesentlichen senkrecht zur Längserstreckung der Leuchte die Querschnitte des Gehäuses und der Lichtscheibe im Wesentlichen senkrecht zur Längserstreckung der Leuchte bestimmt werden, und/oder der Querschnitt des Gehäuses im Wesentlichen senkrecht zur Längserstreckung der Leuchte eine U-Form umfasst.

Weiterhin kann die Oberfläche des Lichtleiters Hochglanz poliert hergestellt werden.

Die Erfindung liefert auch eine Außenspiegelanordnung eines Fahrzeuges mit einer Leuchte, die in einem erfindungsgemäßen Verfahren hergestellt ist.

Dabei kann die Oberfläche der Lichtscheibe in Abhängigkeit von der Art der Leuchte und/oder dem Typ des Fahrzeugs geformt sein, wobei die Leuchte vorzugsweise von einem Blinker umfasst ist oder als Blinker ausgebildet ist.

Schließlich wird noch vorgeschlagen, dass an der Grenzfläche zwischen dem Lichtleiter und der Lichtscheibe Lichtstrahlen von dem Leuchtmittel außerhalb der Licht-Auskoppelstellen einer Totalreflexion unterliegen.

Die erfindungsgemäß hergestellte Leuchte ermöglicht eine gezielte Bereitstellung von Licht-Auskoppelstellen und somit insbesondere eine gleichmäßige Verteilung von Licht längs der Leuchte bei gleichzeitiger Designfreiheit, da
- das Gehäuse, der Lichtleiter und die Lichtscheibe als eine Einheit in gewünschter Form spritzgegossen werden,
- über die Brechungsindizes der Kunststoffe des Lichtleiters und der Lichtscheibe eine Totalreflexion an der Grenzfläche dazwischen eingestellt wird, und
- erst über die Strukturierung der Grenzfläche in dieselbe die Licht-Auskoppelstellen eingebracht werden.

Durch das Spritzgiessen werden zudem Bauteiltoleranzen gering und die Lichtausbeute hoch. Die Lichtausbeute kann durch ein Einfärben oder dergleichen des Lichtleiters noch eingestellt werden. Durch Bereitstellen des Lichtleiters mit Hochglanz polierten Oberflächen kann weiterhin ein unbeabsichtigter Lichtaustritt und/oder eine unbeabsichtigte Absorption von Licht vermieden werden.

Weitere Vorteile und Merkmale der Erfindung ergeben sich aus der nachstehenden Beschreibung bevorzugter Ausführungsbeispiele der Erfindung unter Bezugnahme auf die beiliegenden Figuren.

Es zeigen:
- Fig. 1: ein Gehäuse, einen Lichtleiter und eine Lichtscheibe einer erfindungsgemäß hergestellten Leuchte;
- Fig. 2: die Leuchte aus Fig. 1 als Einheit im Längsschnitt;
- Fig. 3: eine Querschnittsansicht längs der Linie A-B in Fig. 2;
- Fig. 4: einen Teil einer alternativen Leuchte im Längsschnitt; und
- Fig. 5: eine Querschnittsansicht längs der Linie A-B in Fig. 4.

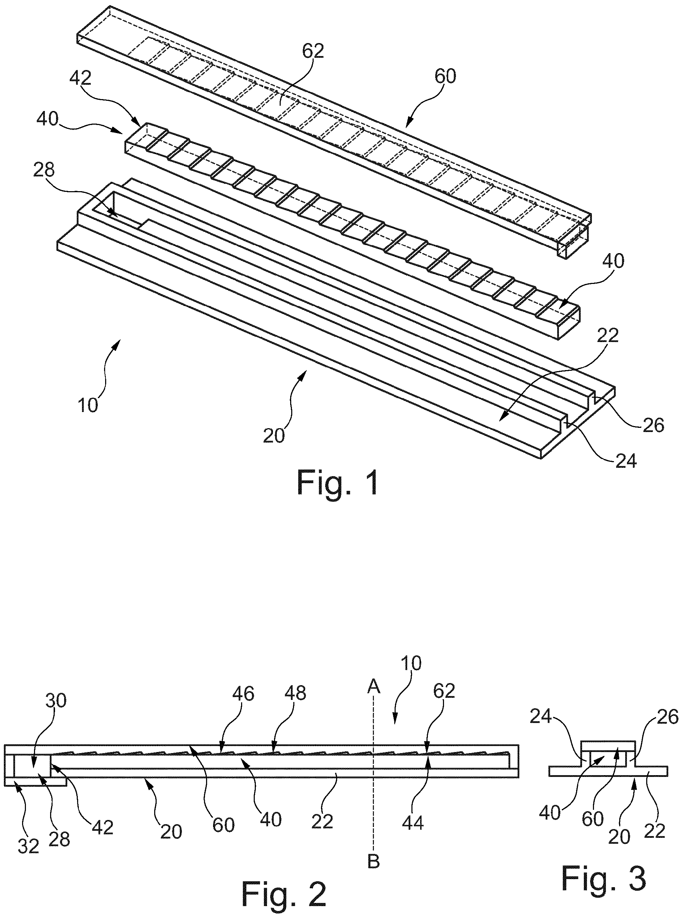

Eine erfindungsgemäß hergestellte Leuchte 10 umfasst, wie in Figur 1 dargestellt, ein Gehäuse 20, einen Lichtleiter 40 und eine Lichtscheibe 60. Diese drei Komponenten sind in einem Spritzgussverfahren hergestellt. Beispielsweise kann der Lichtleiter 40 aus PC in einem ersten Takt, die Lichtscheibe 40 aus PMMA, glasklar oder getönt, in einem zweiten Takt und das Gehäuse 20 aus ABS (Acrylnitril-Butadien-Styrol) in einem dritten Takt hergestellt werden, so dass eine Einheit entsteht, wie beispielsweise in den Figuren 2 und 3, im Längsschnitt bzw. Querschnitt dargestellt.

Genauer gesagt wird das Gehäuse 20 mit einer Rückwand 22 und zwei Stegen 24 und 26 zur Aufnahme des Lichtleiters 40 zwischen den Stegen 24 und 26 auf der Rückwand 22 ausgeformt. Zudem ist in dem Gehäuse 20 eine Aussparung 28 vorgesehen, die zu einem Bauraum 30 für ein nicht gezeigtes Leuchtmittel führt. Das Leuchtmittel kann eine LED auf einer Platine umfassen; und der Bauraum 30 kann durch einen Deckel 32 samt Steckerkasten verschlossen werden.

Der Lichtleiter 40 weist ein Ende mit zumindest einer Licht-Einkoppelstelle 42 an den Bauraum 30 angrenzend auf. Seine Oberfläche, die an die Unterfläche der Lichtscheibe 60 angrenzt, ist mit einer Optik 44 versehen , über die Totalreflexionsstellen 46 und Auskoppelstelle 48 für das Licht, das den Lichtleiter 40 an jeder Einkoppelstelle 42 betritt, bereitgestellt werden, indem nämlich nicht nur die Lichtscheibe 60 mit einer korrespondierenden Optik 62 an ihrer der Optik 44 des Lichtleiters 40 gegenüberliegenden Fläche ausgeformt ist, sondern zudem die Brechungsindizes der Kunststoffe der Lichtscheibe 60 und des Lichtleiters 40 derart unterschiedlich sind, dass es ausschließlich an den Auskoppelstellen 48 nicht zu einer Totalreflexion kommt.

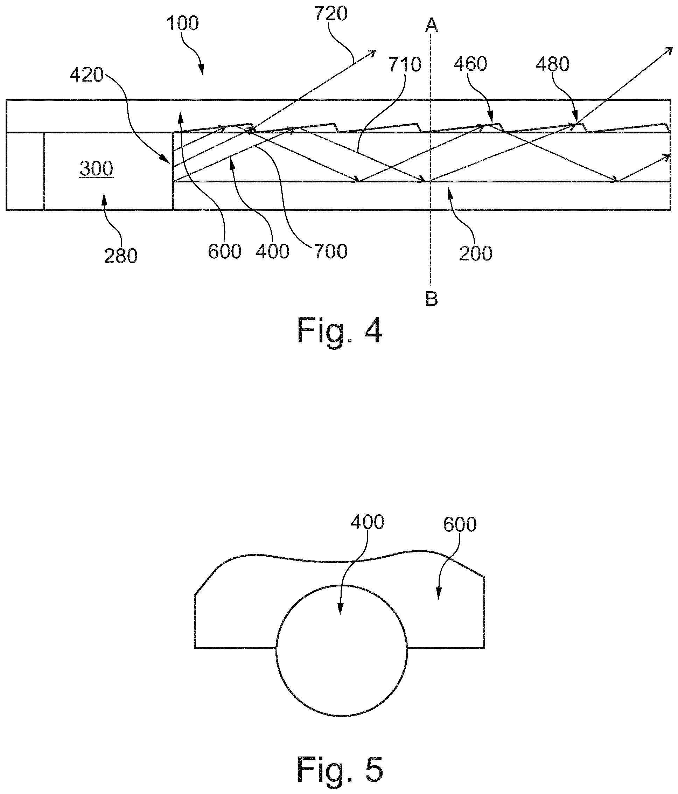

Der Strahlengang innerhalb einer erfindungsgemäß hergestellten Leuchte wird im Anschluss mit Bezug auf die Figuren 4 und 5 näher erläutert. Dort ist eine Leuchte 100 dargestellt, die sich von der Leuchte 10 im Wesentlichen durch eine andere Geometrie des Lichtleiters unterscheidet. Während der Lichtleiter 40 der Leuchte 10 rechteckig im Querschnitt ausgeformt ist, zwischen der Rückwand 22 sowie den Stegen 24 und 26 des Gehäuses 20 und der Lichtscheibe 60 eingeschlossen zu sein, ist der Lichtleiter 400 der Leuchte 100 im Querschnitt kreisförmig ausgebildet, wie in Figur 5 zu sehen ist. An diese Kreisform ist selbstverständlich auch die Form des Gehäuses 200 sowie auf der Lichtscheibe 600 der Leuchte 100 der Figuren 4 und 5 angepasst. Das Gehäuse 200 ist wieder mit einer Aussparung 280 zu einem Bauraum 300 für ein nicht gezeigtes Leuchtmittel ausgeführt.

Der Lichtleiter 400 seinerseits weist wieder Einkoppelstellen 420 für Lichtstrahlen aus dem Leuchtmittel auf, die sich in Form der Lichtstrahlen 700 in dem Lichtleiter 400 ausbreiten, um an den Totalreflexionsstellen 420 in die totalreflektierten Lichtstrahlen 710 und an den Auskoppelstellen 480 in die Leuchte 100 verlassende Lichtstrahlen 720 umgelenkt zu werden. Die Lichtscheibe 600 ist in ihrer Form nicht nur an die Form des Lichtleiters 400 angepasst, sondern kann jegliche Designwünsche an die Leuchte 100 erfüllen. Beispielsweise kann die Oberfläche eine Wellenform aufweisen, wie in Figur 5 dargestellt.

### Bezugszeichenliste

- 10: Leuchte
- 20: Gehäuse
- 22: Rückwand
- 24: Steg
- 26: Steg
- 28: Aussparung
- 30: Bauraum
- 32: Deckel
- 40: Lichtleiter
- 42: Einkoppelstelle
- 44: Optik
- 46: Totalreflexionsstelle
- 48: Auskoppelstelle
- 60: Lichtscheibe
- 62: Optik
- 100: Leuchte
- 200: Gehäuse
- 280: Aussparung
- 300: Bauraum
- 400: Lichtleiter
- 420: Einkoppelstelle
- 460: Totalreflexionsstelle
- 480: Auskoppelstelle
- 600: Lichtscheibe
- 700: Lichtstrahl
- 710: Lichtstrahl
- 720: Lichtstrahl

## Patentansprüche

1. Verfahren zum Herstellen einer Leuchte (10, 100) für Fahrzeuge, bei dem ein Gehäuse (20, 200), ein Lichtleiter (40, 400) und eine Lichtscheibe (60, 600) in einem 3-Komponenten-Spritzverfahren aus Kunststoff als Einheit hergestellt werden, wobei der Lichtleiter (40, 400) an einem Ende zumindest eine Licht-Einkoppelstelle (42, 420) aufweist, der Brechungsindex des Kunststoffes der Lichtscheibe (60, 600) von dem Brechungsindex des Kunststoffes des Lichtleiters (40, 400) unterschiedlich gewählt wird, die Grenzfläche zwischen der Lichtscheibe (60, 600) und dem dazu benachbarten Lichtleiter (40, 400) mit einer Optik (44, 62) ausgeformt wird, und über den Unterschied der beiden Brechungsindizes sowie die Optik (44, 62) bei vorgegebenem Lichteintritt an zumindest einer Licht-Einkoppelstelle (42, 420) an einem Ende des Lichtleiters (40, 400) Licht-Auskoppelstellen (48, 480) längs der Erstreckung des Lichtleiters (40, 400) und aus der Leuchte (10, 100) heraus festgelegt werden, wobei die Oberfläche des Lichtleiters (40, 400), die an die Unterfläche der Lichtscheibe (60, 600) angrenzt, mit einer Optik (44) versehen ist, über die Totalreflexionsstellen (46, 460) und Auskoppelstellen (48, 480) für das Licht, das den Lichtleiter (40, 400) an jeder Einkoppelstelle (42, 420) betritt, bereitgestellt werden, indem nicht nur die Lichtscheibe (60, 600) mit einer korrespondierenden Optik (62) an ihrer der Optik (44) des Lichtleiters (40, 400) gegenüberliegenden Fläche ausgeformt ist, sondern zudem die Brechnungsindizes der Kunststoffe der Lichtscheibe (60, 600) und des Lichtleiters (40, 400) derart unterschiedlich sind, dass es ausschließlich an den Auskoppelstellen (48, 480) nicht zu einer Totalreflexion kommt.

2. Verfahren nach Anspruch 1, **dadurch gekennzeichnet, dass**
das Spritzverfahren in 3 Takten erfolgt, wobei durch den Kunststoff der 3 Komponenten die Reihenfolge der Herstellung der 3 Komponenten bestimmt wird, indem zuerst der Kunststoff mit dem höchsten Schmelzpunkt gespritzt wird, dann der mit dem mittleren Schmelzpunkt und schließlich der mit dem niedrigsten Schmelzpunkt.

3. Verfahren nach Anspruch 1 oder 2, **dadurch gekennzeichnet, dass**
in den Lichtleiter (40, 400) und/oder die Lichtscheibe (60, 600) mindestens ein Lichtkonditionierbereich, wie zum Tönen, Einfärben, Reflektieren oder Streuen, durch Auswahl von zumindest einem Zusatz zu dem jeweiligen Kunststoff eingebracht wird.

4. Verfahren nach einem der vorangehenden Ansprüchen, **dadurch gekennzeichnet, dass** das Gehäuse (20, 200) mit einer Aussparung (28, 280) zu einem Bauraum (30, 300) für zumindest ein Leuchtmittel ausgeformt wird, wobei die Aussparung (28, 280) vorzugsweise mit einem Deckel (32), insbesondere samt Steckerkasten, nach Einbringung des Leuchtmittels in den Bauraum (30, 300) verschlossen wird.

5. Verfahren nach Anspruch 4, **dadurch gekennzeichnet, dass**
das Leuchtmittel durch mindestens eine LED auf einer Platine bereitgestellt wird, und/oder die zumindest eine Licht-Einkoppelstelle (42, 420) an dem dem Bauraum (30, 300) zugewandten Ende des Lichtleiters (40, 400) bereitgestellt wird.

6. Verfahren nach einem der vorangehenden Ansprüchen, **dadurch gekennzeichnet, dass** der Lichtleiter (40, 400) von dem Gehäuse (20, 200) und der Lichtscheibe (60, 600) umschlossen wird, wobei in Abhängigkeit vom Querschnitt des Lichtleiters (40, 400) im Wesentlichen senkrecht zur Längserstreckung der Leuchte (10, 100) die Querschnitte des Gehäuses (20, 200) und der Lichtscheibe (60, 600) im Wesentlichen senkrecht zur Längserstreckung der Leuchte (10, 100) bestimmt werden, und/oder der Querschnitt des Gehäuses (20, 200) im Wesentlichen senkrecht zur Längserstreckung der Leuchte (10, 100) eine U-Form umfasst.

7. Verfahren nach einem der vorangehenden Ansprüchen, **dadurch gekennzeichnet, dass** die Oberfläche des Lichtleiters (40, 400) Hochglanz poliert hergestellt wird.

8. Außenspiegelanordnung eines Fahrzeuges mit einer Leuchte (10, 100), die in einem Verfahren nach einem der vorangehenden Ansprüchen hergestellt ist.

9. Außenspiegelanordnung nach Anspruch 8, **dadurch gekennzeichnet, dass** die Oberfläche der Lichtscheibe (40, 400) in Abhängigkeit von der Art der Leuchte (10, 100) und/oder dem Typ des Fahrzeugs geformt ist, wobei die Leuchte (10, 100) vorzugsweise von einem Blinker umfasst ist oder als Blinker ausgebildet ist.

10. Außenspiegelanordnung nach Anspruch 8 oder 9, **dadurch gekennzeichnet, dass** an der Grenzfläche zwischen dem Lichtleiter (40, 400) und der Lichtscheibe (60, 600) Lichtstrahlen (700, 710, 720) von dem Leuchtmittel außerhalb der Licht-Auskoppelstellen (48, 480) einer Totalreflexion unterliegen.

## Claims

1. Method for producing a lamp (10, 100) for vehicles, in which a housing (20, 200), a light guide (40, 400) and a cover lens (60, 600) are produced from plastic as a unit in a 3-component injection-moulding method, wherein the light guide (40, 400) has at least one light input position (42, 420) at one end, the refractive index of the plastic of the cover lens (60, 600) is selected to be different from the refractive index of the plastic of the light guide (40, 400), the interface between the cover lens (60, 600) and the light guide (40, 400) next to it is configured with optics (44, 62), and, by means of the difference between the two refractive indices and the optics (44, 62), for predetermined light entry at least one light input position (42, 420) at one end of the light guide (40, 400), light output positions (48, 480) out of the lamp (10, 100) are defined along the extent of the light guide (40, 400), wherein that surface of the light guide (40, 400) which adjoins the lower face of the cover lens (60, 600) is provided with optics (44), by means of which total reflection positions (46, 460) and output positions (48, 480) for the light which enters the light guide (40, 400) at each light input position (42, 420) are provided by not only the cover lens (60, 600) being configured with corresponding optics (62) on its face lying opposite the optics (44) of the light guide (40, 400), but also the refractive indices of the plastic of the cover lens (60, 600) and of the light guide (40, 400) being different in such a way that, only at the output positions (48, 480), total reflection does not take place.

2. Method according to claim 1, **characterised in that** the injection-moulding method takes place in 3 cycles, the sequence of the production of the 3 components been determined by the plastic of the 3 components, by the plastic with the highest melting point being injection-moulded first, then that with middle melting point, and lastly that with the lowest melting point.

3. Method according to claim 1 or 2, **characterised in that** at least one light conditioning region, for instance for toning, colouring, reflecting or scattering, is introduced into the light guide (40, 400) and/or the cover lens (60, 600) by selection of at least one additive to the respective plastic.

4. Method according to any one of the preceding claims, **characterised in that** the housing (20, 200) is configured with a recess (28, 280) to form an installation space (30, 300) for at least one lighting means, the recess (28, 280) preferably being closed with a cover (32), in particular together with connector boxes, after introduction of the lighting means into the installation space (30, 300).

5. Method according to claim 4, **characterised in that** the lighting means is provided by at least one LED on a circuit board, and/or the at least one light input position (42, 420) is provided on the end of the light guide (40, 400) facing toward the installation space (30, 300).

6. Method according to any one of the preceding claims, **characterised in that** the light guide (40, 400) is enclosed by the housing (20, 200) and the cover disk (60, 600), the cross sections of the housing (20, 200) and of the cover lens (60, 600) essentially perpendicularly to the longitudinal extent of the lamp (10, 100) being determined as a function of the cross section of the light guide (40, 400) essentially perpendicularly to the longitudinal extent of the lamp (10, 100), and/or the cross section of the housing (20, 200) essentially perpendicularly to the longitudinal extent of the lamp (10, 100) having a U-shape.

7. Method according to any one of the preceding claims, **characterised in that** the surface of the light guide (40, 400) produced to be polished with a high polish.

8. External mirror arrangement according to any one of the preceding claims, having a lamp (10, 100) which is produced by a method according to any one of the preceding claims.

9. External mirror arrangement according to claim 8, **characterised in that** the surface of cover lens (40, 400) is shaped as a function of the type of the lamp (10, 100) and/or the type of the vehicle, the lamp (10, 100) preferably being comprised by an indicator or formed as an indicator.

10. External mirror arrangement according to claim 8 or 9, **characterised in that** light rays (700, 710, 720) from the lighting means experience total reflection outside the light output positions (48, 480) at the interface between the light guide (40, 400) and the cover lens (60, 600).

## Revendications

1. Procédé de fabrication d'une lampe (10, 100) pour véhicules, dans lequel un boîtier (20, 200), un guide de lumière (40, 400) et un cabochon (60, 600) sont fabriqués en tant qu'unité selon un procédé d'injection à 3 composants en plastique, dans lequel le guide de lumière (40, 400) présente à une extrémité au moins un endroit de couplage de lumière (42, 420), l'indice de réfraction du plastique du cabochon (60, 600) est choisi différent de l'indice de réfraction du plastique du guide de lumière (40, 400), la surface de délimitation entre le cabochon (60, 600) et le guide de lumière (40, 400) adjacent à celui-ci est réalisée avec une optique (44, 62), et des endroits de découplage de lumière (48, 480) sont fixés le long de l'extension du guide de lumière (40, 400) et hors de la lampe (10, 100) via la différence entre les deux indices de réfraction ainsi que l'optique (44, 62) pour une entrée de lumière prédéfinie au niveau d'au moins un endroit de couplage de lumière (42, 420) à une extrémité du guide de lumière (40, 400), dans lequel la surface supérieure du guide de lumière (40, 400), qui est adjacente à la surface inférieure du cabochon (60, 600), est dotée d'une optique (44), via laquelle des endroits de réflexion totale (46, 460) et des endroits de découplage (48, 480) sont mis à disposition pour la lumière, qui entre dans le guide de lumière (40, 400) à chaque endroit de couplage (42, 420), par le fait que non seulement le cabochon (60, 600) est réalisé avec une optique correspondante (62) au niveau de sa surface opposée à l'optique (44) du guide de lumière (40, 400), mais en outre l'indice de réfraction des plastiques du cabochon (60, 600) et du guide de lumière (40, 400) sont si différents qu'il n'y a pas de réflexion totale exclusivement au niveau des endroits de découplage (48, 480).

2. Procédé selon la revendication 1, **caractérisé en ce que** le procédé d'injection se fait en 3 temps, dans lequel l'ordre de fabrication des 3 composants est déterminé par le plastique des 3 composants, par le fait que le plastique avec le point de fusion le plus élevé est injecté en premier, puis celui avec le point de fusion médian et enfin celui avec le point de fusion le plus bas.

3. Procédé selon la revendication 1 ou 2, **caractérisé en ce que** au moins une zone de conditionnement de la lumière, comme pour la teinte, la coloration, la réflexion ou la diffusion, par sélection d'au moins un additif pour le plastique respectif est introduite dans le guide de lumière (40, 400) et/ou le cabochon (60, 600).

4. Procédé selon l'une quelconque des revendications précédentes, **caractérisé en ce que** le boîtier (20, 200) est réalisé avec un évidement (28, 280) en un espace de construction (30, 300) pour au moins un moyen d'éclairage, dans lequel l'évidement (28, 280) est fermé de préférence avec un couvercle (32), en particulier avec la boîte à fiches, après introduction du moyen d'éclairage dans l'espace de construction (30, 300).

5. Procédé selon la revendication 4, **caractérisé en ce que** le moyen d'éclairage est mis à disposition par au moins une LED sur une carte, et/ou l'au moins un endroit de couplage de lumière (42, 420) est mis à disposition à l'extrémité du guide de lumière (40, 400) tournée vers l'espace de construction (30, 300).

6. Procédé selon l'une quelconque des revendications précédentes, **caractérisé en ce que** le guide de lumière (40, 400) est entouré par le boîtier (20, 200) et le cabochon (60, 600), dans lequel les sections transversales du boîtier (20, 200) et du cabochon (60, 600) sensiblement perpendiculaires à l'extension longitudinale de la lampe (10, 100) sont déterminées en fonction de la section transversale du guide de lumière (40, 400) sensiblement perpendiculaire à l'extension longitudinale de la lampe (10, 100), et/ou la section transversale du boîtier (20, 200) sensiblement perpendiculaire à l'extension longitudinale de la lampe (10, 100) comprend une forme en U.

7. Procédé selon l'une quelconque des revendications précédentes, **caractérisé en ce que** la surface supérieure du guide de lumière (40, 400) est fabriquée polie haute brillance.

8. Dispositif rétroviseur extérieur d'un véhicule avec une lampe (10, 100), qui est fabriquée dans un procédé selon l'une quelconque des revendications précédentes.

9. Dispositif rétroviseur extérieur selon la revendication 8, **caractérisé en ce que** la surface supérieure du cabochon (40, 400) est formée en fonction du type de lampe (10, 100) et/ou du type de véhicule, dans lequel la lampe (10, 100) est entourée de préférence par un clignotant ou est réalisée en tant que clignotant.

10. Dispositif rétroviseur extérieur selon la revendication 8 ou 9, **caractérisé en ce que** sur la surface de délimitation entre le guide de lumière (40, 400) et le cabochon (60, 600), des rayons de lumière (700, 710, 720) du moyen d'éclairage à l'extérieur des endroits de découplage de lumière (48, 480) sont soumis à une réflexion totale.
